# FASCICULE DE BREVET EUROPEEN

(11) **EP 1 607 031 B1**
(45) Date de publication et mention de la délivrance du brevet: **31.03.2010**
(21) Numéro de dépôt: 05291279.7
(22) Date de dépôt: 14.06.2005
(51) Int. Cl.: A47J 37/06

(54) **Appareil électroménager à raclette**
Haushaltsgerät für Raclette
Raclette-apparatus

(30) Priorité: 14.06.2004 FR 0406415
(43) Date de publication de la demande: 21.12.2005
(73) Titulaire: SEB S.A., 69130 Ecully (FR)
(72) Inventeur: Lequy, David, 73000 Chambery-le-Vieux (FR); Moine, Olivier, 73100 Aix-les-Bains (FR)
(74) Mandataire: Pichat, Thierry

(56) Documents cités:
- EP-A- 1 396 219
- US-B1- 6 170 388

## Description

La présente invention concerne un appareil électroménager présentant une surface de chauffe importante, par exemple un appareil à raclette ou à faire des crêpes.

On connaît un appareil électroménager du type comprenant, d'une part, un ensemble chauffant qui comporte une plaque de cuisson ayant une surface supérieure adaptée à recevoir un aliment à cuire, et une résistance électrique reliée à la surface inférieure de la plaque de cuisson, et, d'autre part, des pieds reliés à l'ensemble chauffant et adaptés à maintenir celui-ci à une distance suffisante du support sur lequel est posé l'appareil pour permettre, pendant l'utilisation de l'appareil, de passer une assiette sous l'ensemble chauffant et de transvaser l'aliment de la plaque de cuisson à l'assiette. Un tel appareil électroménager est par exemple décrit dans la demande FR 2 220 221.

Dans un tel appareil, l'ensemble chauffant est séparé du support par au moins de 15 cm afin de permettre le passage des assiettes sous l'ensemble chauffant et au-dessus des verres disposés sur la table. Un tel appareil présente l'inconvénient majeur d'être particulièrement volumineux et de requérir une place importante pour son rangement.

Le document EP 1 396 219 divulgue quant à lui, un appareil électroménager du type précité dans lequel chaque pied est relié de façon articulée, d'une part, par son extrémité supérieure à la périphérie de l'ensemble chauffant, et, d'autre part, par son extrémité inférieure à la périphérie d'une plaque inférieure faisant office de support pour des coupelles de réception d'aliment à cuire, les pieds étant mobiles entre une position d'utilisation dans laquelle ils sont adaptés à maintenir l'ensemble chauffant à une distance suffisante de la plaque inférieure pour permettre le passage des coupelles sous la résistance électrique, et une position de rangement dans laquelle l'élément chauffant repose directement sur la plaque inférieure et les pieds sont disposés à la périphérie de ces deux éléments.

Le problème que tend à résoudre la présente invention est d'avoir un appareil électroménager peu encombrant quand il est rangé, notamment sans réduire la surface de la plaque de cuisson, tout en limitant le transfert thermique vers le support sur lequel repose l'appareil électroménager.

Selon l'invention, l'ensemble chauffant comporte une plaque formant réflecteur qui s'étend sous la plaque de cuisson et la résistance électrique, et les pieds, en position de rangement, sont disposés contre et sous l'ensemble chauffant, le long de celui-ci.

Ainsi, du fait de la présence du réflecteur thermique disposé sous la plaque de cuisson, le rayonnement thermique émis en direction du support sur lequel repose l'appareil est fortement diminué, et une fois les pieds en position de rangement, la hauteur globale de l'appareil est considérablement réduite, de l'ordre de 70%.

D'autres particularités et avantages de la présente invention apparaîtront dans la description détaillée de deux modes de réalisation donnés à titre d'exemples non limitatifs et illustrés dans les dessins annexés.
La figure 1 est une vue de haut et de côté d'un appareil électroménager conformément à un premier mode de réalisation, les pieds étant en position d'utilisation ;
La figure 2 est une vue de face de l'appareil électroménager de la figure 1 ;
Les figures 3 et 4 sont des vus similaires aux figures 1 et 2 respectivement, les pieds étant en position de rangement ;
La figure 5 est une vue de dessous de l'appareil électroménager illustré aux figures 1 à 4, les pieds étant en position de rangement ;
La figure 6 est une vue de face d'un appareil électroménager selon un second mode de réalisation de la présente invention, les pieds étant en position de rangement ;
La figure 7 est une vue de dessous de l'appareil électroménager illustré à la figure 6, les pieds étant en position de rangement ; et.
La figure 8 est une vue schématique en coupe de la plaque de cuisson.

L'appareil électroménager 1, en l'occurrence un appareil à raclette 1, comprend un ensemble chauffant 2 et des pieds 3 reliés à l'ensemble chauffant 2.

L'ensemble chauffant 2 comporte une plaque de cuisson 4 et une résistance électrique.

La plaque de cuisson 4 possède une surface supérieure 6 qui est adaptée à recevoir directement un aliment à cuire (en l'occurrence, du fromage) et une surface inférieure 7 sous laquelle est disposée la résistance électrique. Dans les présents exemples, la surface supérieure 6 de la plaque de cuisson 4 est revêtue d'un anti-adhésif, par exemple du PTFE. De plus, afin de faciliter son lavage (par exemple au lave-vaisselle), la plaque de cuisson 4 est séparable des autres éléments constituant l'ensemble chauffant 2.

Les pieds 3 sont adaptés à maintenir l'ensemble chauffant 2 à une distance suffisante du support sur lequel reposent les pieds 3 pour permettre, pendant l'utilisation de l'appareil 1, de passer une assiette sous l'ensemble chauffant 2 et au-dessus des verres disposés sur la table. Ainsi, il est possible, par exemple, en utilisant une spatule 13, de faire glisser le fromage fondu de la plaque de cuisson 4 vers l'assiette. Les pieds 3 sont mobiles entre leur position d'utilisation, et une position de rangement dans laquelle ils sont disposés contre et sous l'ensemble chauffant 2, le long de celui-ci.

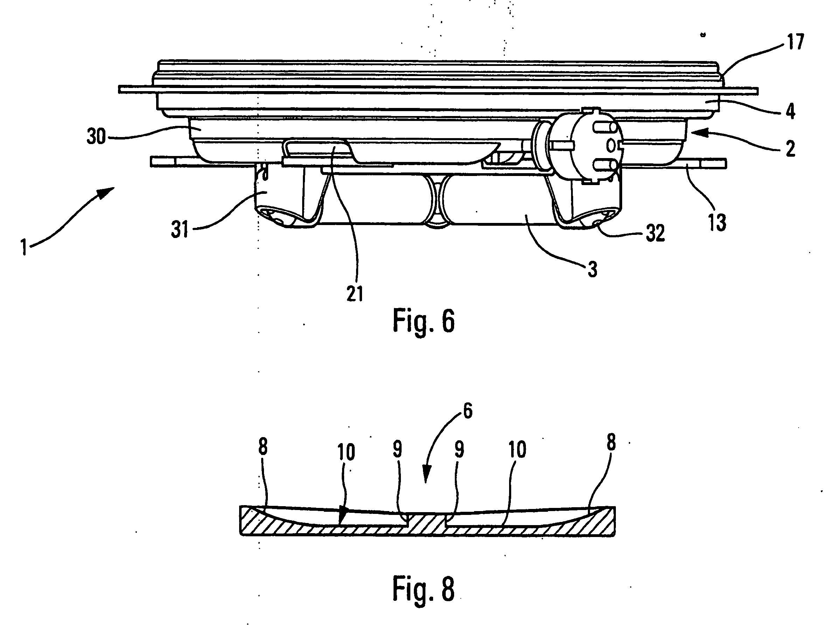

Afin d'empêcher l'huile résultant de la fonte du fromage et le fromage fondu de couler hors de la plaque de cuisson 4, dans les deux modes de réalisation, la surface supérieure 6 comprend un rebord périphérique 8 qui fait saillie vers le haut. Afin de faciliter le transfert du fromage fondu de la plaque de cuisson 4 à une assiette, le rebord périphérique 8 est conformé de façon à ne pas présenter de butée gênant le transfert du fromage. De préférence, comme on peut le voir à la figure 8, l'angle entre le rebord périphérique 8 et le plan de la plaque de cuisson 4 est relativement faible (de préférence de l'ordre de 30°).

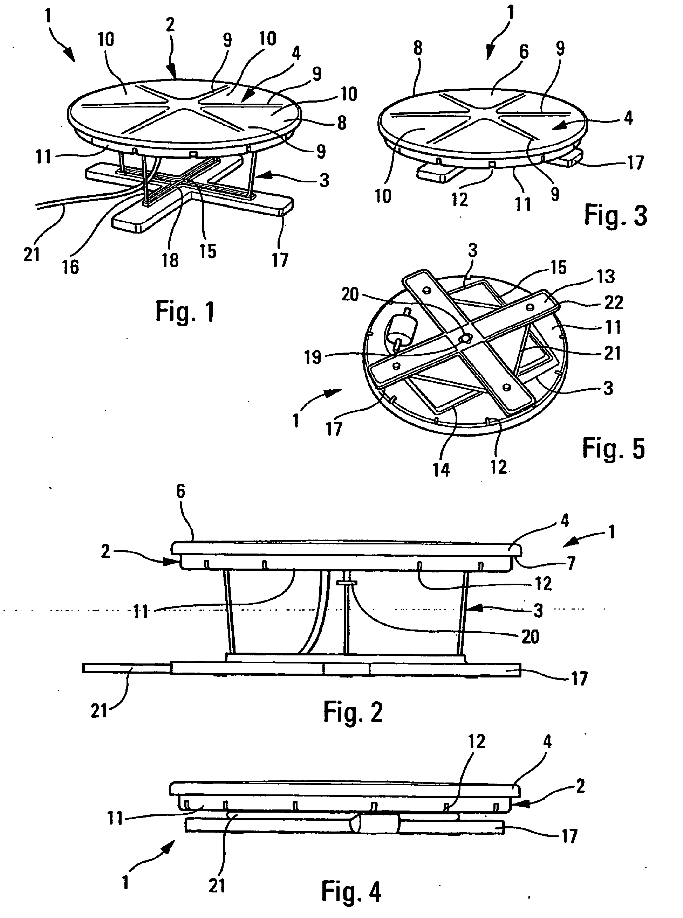

De plus, comme on peut le voir aux figures 1 et 3, la surface de supérieure 6 comprend également des rebords radiaux 9 divisant la surface supérieure 6 en portions de cuisson 10, ce qui limite la jonction des morceaux de fromage en cours de fonte. Ces rebords radiaux 9 font un général un angle droit avec la surface supérieure 6.

L'ensemble chauffant 2 comprend également une plaque 11 formant réflecteur. Ce réflecteur 11 s'étend sous la plaque de cuisson 2 et la résistance électrique et permet de limiter le transfert thermique vers le bas, c'est à dire vers le support sur lequel les pieds 3 prennent appui.

De plus, l'appareil électroménager 1 comprend également un élément d'assise 17 amovible qui est adapté à servir de support sur lequel reposent les pieds 3 en position d'utilisation.

Dans le premier mode de réalisation, l'appareil électroménager 1 comprend quatre pieds 3 qui sont montés pivotants par rapport à l'ensemble chauffant 2, chaque pied 3 étant formé par une tige 3, les quatre tiges 3 étant reliées entre elles par paire, à leur extrémité libre, par une tige de liaison 15, de sorte que les quatre pieds 3 forment deux organes de soutien 16 en forme de U. Les deux organes de soutien 16 sont déposés perpendiculairement l'un par rapport à l'autre de sorte que, quand les pieds 3 sont dans leur position de rangement, les deux tiges de liaison 15 se croisent.

Afin de maintenir les pieds 3 dans leur position d'utilisation, l'élément d'assise 17 comprend une rainure 18 en forme de croix qui est adaptée à recevoir les tiges de liaison 15 et à les immobiliser.

Par ailleurs, l'élément d'assise 17 est adapté à être solidarisé à l'ensemble chauffant 2 quand les pieds 3 sont dans leur position de rangement. A cet effet, l'élément d'assise 17 comprend des moyens de fixation 19 qui sont adaptés à coopérer avec des moyens complémentaires de fixation 20 solidaires de l'ensemble chauffant 2.

Comme on peut le voir à la figure 5, les moyens de fixation 19 sont formés par une fente 19 réalisée dans l'élément d'assise 17 (et disposée en l'occurrence au centre de l'élément d'assise 17) et les moyens complémentaires de fixation 20 sont formés par une patte 20 qui est solidaire du réflecteur 11. La fente 19 et la patte 20 sont conformées de façon à permettre le passage de la patte 20 au travers de la fente 19 uniquement quand l'ensemble chauffant 2 et l'élément d'assise 17 sont convenablement orientés angulairement l'un par rapport à l'autre. Ainsi, après avoir fait traverser la fente 19 par la patte 20, il suffit de faire tourner l'élément d'assise 17 par rapport à l'ensemble chauffant 2 pour réaliser la fixation, la patte ne pouvant sortir de la fente 19.

Comme on peut le voir à la figure 4, quand l'élément d'assise 17 et l'ensemble chauffant 2 sont fixés l'un à l'autre, l'appareil électroménager 1 forme le bâti d'une bobine qui est utilisée pour y enrouler le câble d'alimentation électrique 21 de la résistance électrique de chauffe, les deux éléments 2,17 formant les deux plateaux de la bobine et l'arbre portant la patte 20 formant l'axe d'enroulement. En outre, quand l'élément d'assise 17 est fixé à l'ensemble chauffant 2, les pieds 3 en position de rangement sont disposés entre ces deux éléments 2,17, ce qui permet de les maintenir dans cette position, le réflecteur 11 auquel les pieds 3 sont reliés, comprenant des rainures 14 qui sont adaptées à recevoir ces derniers en position de rangement.

De plus, comme on peut le voir à la figure 5, l'élément d'assise 17 comprend des logements 22 qui sont adaptés à recevoir les spatules de transfert 13.

Par ailleurs, afin d'avoir un transfert thermique suffisant en direction du support pour maintenir au chaud des aliments (par exemple des pommes de terre) contenus dans un récipient disposé sous l'ensemble chauffant 2 et entre les pieds 3, le réflecteur 11 comporte des ouvertures 12 de transfert de chaleur.

Dans le second mode de réalisation, l'ensemble chauffant 2 comprend une base 30 en matière plastique qui s'étend sous le réflecteur 11, ce dernier étant enfermé d'une part, par la plaque de cuisson 6, et, d'autre part, par la base 30.

L'appareil électroménager 1 comprend trois pieds 3 en bois qui sont montés pivotants par rapport à l'ensemble chauffant 2, chaque pied 3 étant formé par une tige 3 indépendante.

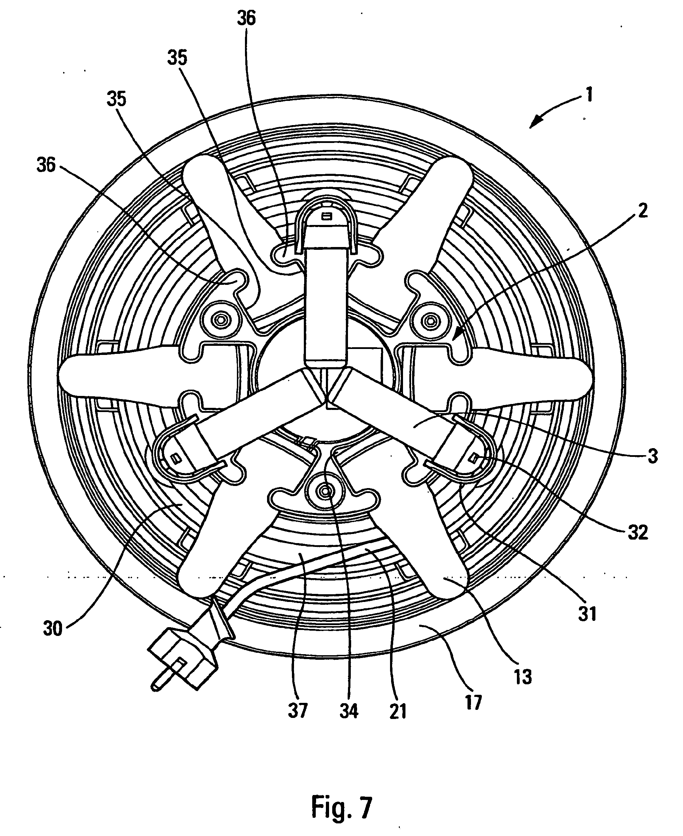

Comme on peut le voir aux figures 6 et 7, les trois pieds 3 sont reliés à l'ensemble chauffant 2 par la surface inférieure de ce dernier (c'est à dire par la surface faisant face au support sur lequel repose l'ensemble chauffant quand il est en cours d'utilisation) et supportent l'ensemble de l'appareil.

La base 30 comprend des moyens d'articulation 31 permettant l'articulation des pieds 3 par rapport à l'ensemble chauffant 2. Ces moyens d'articulation 31 sont conformés de façon à immobiliser les pieds 3 dans leurs positions de rangement et d'utilisation par le franchissement d'un point dur. A cet effet, chaque pied 3 comprend deux cavités 32 qui sont adaptées à coopérer avec une patte 33 élastiquement déformable solidaire de la base 21. Quand le pied 3 est dans sa position de rangement ou d'utilisation, la patte 33 est disposée dans la cavité 32 correspondante.

Par ailleurs, la base 30 comprend des logements 34 adaptés à recevoir les spatules 13. Ces logements 34 sont réalisés à la surface inférieure de la base 30 et ils sont chacun délimité angulairement par deux bords radiaux 35 entre lesquels est rangée la spatule 13. Chaque bord radial 35 comprend un ergot 36 qui s'étend au-dessus du logement 34 correspondant de façon à définir, avec les bords radiaux 35 une section de passage de la spatule 13, le maintien de cette dernière dans son logement 34 étant assuré par les dimensions réciproques de la spatule et du logement 34 qui assurent un frottement immobilisateur.

En outre, la base 30 comprend une rainure annulaire 37 pour le rangement du câble d'alimentation électrique 21. Cette rainure 37 est réalisée à la périphérie de la surface inférieure de la base 30. Les moyens d'articulation 31 s'étendent partiellement au-dessus de la rainure 37 de façon à permettre l'insertion du câble 21 dans la rainure 37 et son maintien partiel dans cette dernière. Par ailleurs, les spatules 13, quand elles sont dans leurs logements 34, recouvrent intégralement la rainure 37 selon leur secteur angulaire correspondant, de façon à emprisonner le câble 21.

Dans le second mode de réalisation, l'élément d'assise 17 est un simple plateau du type plat à tarte ayant un fond, un épaulement annulaire et un rebord annulaire s'étendant parallèlement au fond. Le fond et le rebord annulaire sont conformés de façon à épouser la plaque de cuisson 6 et à recouvrir cette dernière, comme on peut le voir aux figures 6 et 7. Par ailleurs, le fond est conformé de façon à servir de support aux pieds 3 en position d'utilisation. Dans ce mode de réalisation, l'élément d'assise 17 n'est pas solidarisé à l'ensemble chauffant 2. Ce plateau permet, quand l'appareil est utilisé, de recevoir les morceaux d'aliments tombant de l'ensemble chauffant 2, et d'isoler thermiquement la table de la chaleur émise par la résistance électrique.

Il serait possible d'apporter des modifications aux modes de réalisation décrits.

Ainsi, les pieds peuvent être séparables de l'ensemble chauffant. Dans ce cas, ils peuvent être conformés avec l'ensemble chauffant de façon à pouvoir y être fixés (par exemple par encliquetage dans des logements pouvant être réalisés à la surface inférieure de l'ensemble chauffant) dans une position stable définissant une position d'utilisation. L'appareil pouvant par ailleurs comprendre sans sa face inférieure des logements permettant le rangement des pieds dans leur position de rangement.

De plus, il est possible d'utiliser une plaque de cuisson conformée de façon à permettre le raclage de l'aliment et son transfert vers un réceptacle (par exemple une assiette) quel que soit l'agencement de ses pieds.

## Revendications

1. Appareil électroménager (1) comprenant, d'une part, un ensemble chauffant (2) qui comporte une plaque de cuisson (4) ayant une surface supérieure (6) adaptée à recevoir un aliment à cuire, et une résistance électrique disposé sous la surface inférieure (7) de la plaque de cuisson (4), et, d'autre part, des pieds (3) reliés à l'ensemble chauffant (2), mobiles entre une position de rangement et une position d'utilisation dans laquelle ils sont adaptés à maintenir l'ensemble chauffant (2) à une distance suffisante du support sur lequel est posé l'appareil (1) pour de préférence permettre, pendant l'utilisation de l'appareil (1), de passer une assiette sous l'ensemble chauffant (2) et de transvaser l'aliment de la plaque de cuisson (4) à l'assiette, **caractérisé en ce que** l'ensemble chauffant (2) comporte une plaque formant réflecteur (11) qui s'étend sous la plaque de cuisson (4) et la résistance électrique, et **en ce qu'**en position de rangement, les pieds (3) sont disposés contre et sous l'ensemble chauffant (2), le long de celui-ci.

2. appareil électroménager (1) selon la revendication 1, **caractérisé en ce que** l'ensemble chauffant (2) comprend des moyens d'articulation (31) permettant l'articulation pivotante des pieds (3) par rapport à l'ensemble chauffant (2).

3. Appareil électroménager (1) selon la revendication 2, **caractérisé en ce que** les moyens d'articulation (31) sont conformés de façon à immobiliser les pieds (3) dans leurs positions de rangement et d'utilisation par passage d'un point dur.

4. Appareil électroménager (1) selon la revendication 3, **caractérisé en ce que** chaque pied (3) comprend deux cavités (32) qui sont adaptées à coopérer avec une patte (33) élastiquement déformable solidaire de l'ensemble chauffant (2) de façon à permettre l'immobilisation du pied (3) dans sa position correspondante.

5. Appareil électroménager (1) selon l'une des revendications 1 à 4, **caractérisé en ce qu'**il comprend quatre pieds (3) formés par une tige, les quatre pieds (3) étant reliés entre eux, par paire, par une tige de liaison (15), de sorte que les quatre pieds (3) forment deux organes de soutien (16) en forme de U.

6. Appareil électroménager (1) selon la revendication 5, **caractérisé en ce que** les deux organes de soutien (16) sont disposés perpendiculairement l'un par rapport à l'autre de sorte que, quand les pieds (3) sont dans leur position de rangement, les deux tiges de liaison (15) se croisent.

7. Appareil électroménager (1) selon l'une des revendications 1 à 4, **caractérisé en ce qu'**il comprend trois pieds (3) indépendants les uns des autres.

8. Appareil électroménager (1) selon l'une des revendications 1 à 7, **caractérisé en ce que** l'ensemble chauffant, (2) comprend des rainures (14) adaptées à recevoir les pieds (3) en position de rangement.

9. Appareil électroménager (1) selon l'une des revendications 1 à 8, **caractérisé en ce que** la surface supérieure (6) de la plaque de cuisson (4) comprend un rebord périphérique (8) qui fait saillie vers le haut selon un angle de l'ordre de 30° avec le plan de la plaque de cuisson (4).

10. Appareil électroménager (1) selon l'une des revendications 1 à 9 **caractérisé en ce que** la surface supérieure (6) de la plaque de cuisson (4) comprend des rebords radicaux (9) qui font saillie verticalement et divisent la surface supérieure (6) en portions de cuisson (10).

11. Appareil électroménager (1) selon l'une des revendications 1 à 10, **caractérisé en ce que** le réflecteur (11) comporte des ouvertures (12) permettant de transférer de l'énergie thermique à un récipient contenant des aliments à maintenir au chaud disposé sous l'ensemble chauffant (2), entre les pieds (3).

12. Appareil électroménager (1) selon l'une des revendications 1 à 10, **caractérisé en ce que** l'ensemble chauffant (2) comprend une base (30) qui s'étend sous la plaque de cuisson. (4) et la résistance électrique.

13. Appareil électroménager selon la revendication 12, **caractérisé en ce que** la base (30) s'étend sous le réflecteur (11) qui est enveloppé par la base (30) et la plaque de cuisson (4).

14. Appareil électroménager (1) selon l'une des revendications 1 à 13, **caractérisé en ce que** la plaque de cuisson (4) est séparable des autres éléments (11,30) constituant l'ensemble chauffant (2).

15. Appareil électroménager (1) selon l'une des revendications 1 à 14, **caractérisé en ce qu'**il comprend un élément d'assise (17) amovible adapté à servir de support sur lequel reposent les pieds (3) quand ils sont en position d'utilisation.

16. Appareil électroménager (1) selon la revendication 15, **caractérisé en ce que** l'élément d'assise (17) est formé par un plateau (17) qui s'étend radialement au-delà de l'ensemble chauffant (2) quand il sert de support de façon à recevoir les morceaux d'aliments tombant de l'ensemble chauffant (2).

17. Appareil électroménager (1) selon la revendication 15 ou 16, **caractérisé en ce que** l'élément d'assise (17) est adapté à être solidarisé à l'ensemble chauffant (2), sous celui-ci, quand les pieds (3) sont dans leur position de rangement, de façon à maintenir ces derniers dans cette position.

18. Appareil électroménager (1) selon la revendication 17, **caractérisé en ce que** l'élément d'assise (17) comprend des moyens de fixation (19) adaptés à coopérer avec des moyens complémentaires de fixation (20) de l'ensemble chauffant (2) de façon à être fixé à ce dernier.

19. Appareil électroménager (1) selon la revendication 18, **caractérisé en ce que** les moyens complémentaires de fixation (20) sont formées par une patte (20) solidaire de l'ensemble chauffant (2) et adaptée à traverser une fente (19) formant moyens de fixation (19) uniquement quand l'ensemble chauffant (2) et l'élément d'assise (17) sont convenablement orientés l'un par rapport à l'autre et à réalises la fixation quand ils ne sont pas convenablement orientés, la patte (20) traversant alors la fente (19).

20. Appareil électroménager (1) selon l'une des revendications 16 à 19 dépendante de la revendication 6, **caractérisé en ce que** l'élément d'assise (17) comprend une rainure (18) en forme de croix adaptée à recevoir les tiges de liaison (15) quand les pieds (3) sont en position d'utilisation.

21. Appareil électroménager (1) selon l'une des revendications 1 à 20, **caractérisé en ce qu'**il comprend des logements (22,34) adaptés à recevoir des spatules (13) de transfert.

22. Appareil électroménager (1) selon la revendication 21 dépendante de l'une des revendications 15 à 20, **caractérisé en ce que** les logements (22) sont réalisés dans l'élément d'assise (17).

23. Appareil électroménager (1) selon la revendication 21 dépendante de la revendication 13 ou de l'une des revendications qui en dépendent, **caractérisé en ce que** les logements (22) sont réalisés dans la base (30).

24. Appareil électroménager (1) selon l'une des revendication 1 à 23, **caractérisé en ce qu'**il comprend des moyens permettant le rangement d'un câble d'alimentation (21) de la résistance électrique.

25. Appareil électroménager (1) selon la revendication 24 dépendante de la revendication 17 ou de l'une des revendications qui en dépendent, **caractérisé en ce que**, quant l'élément d'assise (17) et l'ensemble chauffant (2) sont fixés l'un à l'autre, l'appareil électroménager (1) forme le bâti d'une bobine utilisée pour y enrouler le câble (21).

26. Appareil électroménager (1) selon la revendication 24 dépendante de la revendication 13 ou de l'une des revendications qui en dépendent, **caractérisé en ce que** la base (30) comprend une rainure annulaire, (37) pour le rangement du câble (21).

## Claims

1. Domestic electrical appliance (1) comprising firstly a heating assembly (2) that comprises a hotplate (4) having a top surface (6) for receiving food to be cooked, and an electric element disposed under the bottom surface (7) of the hotplate (4), and secondly feet (3) connected to the heating assembly (2), able to move between a storage position and a use position in which they are adapted to keep the heating assembly (2) at a sufficient distance from the support on which the appliance (1) is placed in order preferably to make it possible, during the use of the appliance (1), to pass a plate under the heating assembly (2) and to transfer the food from the hotplate (4) to the plate, **characterised in that** heating assembly (2) comprises a plate forming a reflector (11) that extends under the hotplate (4) and the electric element, and **in that**, in the storage position, the feet (3) are disposed against and under the heating assembly (2), along it.

2. Domestic electrical appliance (1) according to claim 1, **characterised in that** the heating assembly (2) comprises articulation means (31) allowing the pivoting articulation of the feet (3) with respect to the heating assembly (2).

3. Domestic electrical appliance (1) according to claim 2, **characterised in that** the articulation means (31) are conformed so as to immobilise the feet (3) in their storage and use positions by passing through a tight spot.

4. Domestic electrical appliance (1) according to claim 3, **characterised in that** each foot (3) comprises two cavities (32) that are adapted to cooperate with an elastically deformable lug (33) secured to the heating assembly (2) so as to enable the foot (3) to be immobilised in its corresponding position.

5. Domestic electrical appliance (1) according to one of claims 1 to 4, **characterised in that** it comprises four feet (3) formed by a rod, the four feet (3) being connected together, in pairs, by a connecting rod (15) so that the four feet (3) form two U-shaped support members (16).

6. Domestic electrical appliance (1) according to claim 5, **characterised in that** the two support members (16) are disposed perpendicularly with respect to each other so that, when the feet (3) are in their storage position, the two connecting rods (15) cross.

7. Domestic electrical appliance (1) according to one of claims 1 to 4, **characterised in that** it comprises three feet (3) independent of one another.

8. Domestic electrical appliance (1) according to one of claims 1 to 7, **characterised in that** the heating assembly (2) comprises grooves (14) adapted to receive the feet (3) in the storage position.

9. Domestic electrical appliance (1) according to one of claims 1 to 8, **characterised in that** the top surface (6) of the hotplate (4) comprises a peripheral rim (8) that projects upwards at an angle of around 30° to the plane of the hotplate (4).

10. Domestic electrical appliance (1) according to one of claims 1 to 9, **characterised in that** the top surface (6) of the hotplate (4) comprises radial rims (9) that project vertically and divide the top surface (6) into cooking portions (10).

11. Domestic electrical appliance (1) according to one of claims 1 to 10, **characterised in that** the reflector (11) comprises openings (12) for transferring thermal energy to a receptacle containing food to be kept hot disposed under the heating assembly (2), between the feet (3).

12. Domestic electrical appliance (1) according to one of claims 1 to 10, **characterised in that** the heating assembly (2) comprises a base (30) that extends under the hotplate (4) and electric element.

13. Domestic electrical appliance (1) according to claim 12, **characterised in that** the base (30) extends under the reflector (11), which is enclosed by the base (30) and hotplate (4).

14. Domestic electrical appliance (1) according to one of claims 1 to 13, **characterised in that** the hotplate (4) is separable from the other elements (11, 30) constituting the heating assembly (2).

15. Domestic electrical appliance (1) according to one of claims 1 to 14, **characterised in that** it comprises a removable seat element (17) adapted to serve as a support on which the feet (3) rest when they are in the use position.

16. Domestic electrical appliance (1) according to claim 15, **characterised in that** the seat element (17) is formed by a plate (17) that extends radially beyond the heating assembly (2) when it serves as a support so as to receive the pieces of food falling from the heating assembly (2).

17. Domestic electrical appliance (1) according to claim 15 or 16, **characterised in that** the seat element (17) is adapted to be secured to the heating assembly (2), under it, when the feet (3) are in their storage position, so as to hold them in this position.

18. Domestic electrical appliance (1) according to claim 17, **characterised in that** the seat element (17) comprises fixing means (19) adapted to cooperate with complementary fixing means (20) for the heating assembly (2) so as to be fixed to the latter.

19. Domestic electrical appliance (1) according to claim 18, **characterised in that** the complementary fixing means (20) are formed by a lug (20) secured to the heating assembly (2) and adapted to pass through a slot (19) forming fixing means (19) only when the heating assembly (2) and the seat element (17) are suitably oriented with respect to each other and to effect the fixing when they are not suitably oriented, the lug (20) then passing through the slot (19).

20. Domestic electrical appliance (1) according to one of claims 16 to 19 dependent on claim 6, **characterised in that** the seat element (17) comprises a cruciform groove (18) adapted to receive the connecting rods (15) when the feet (3) are in the use position.

21. Domestic electrical appliance (1) according to one of claims 1 to 20, **characterised in that** it comprises housings (22, 34) for receiving transfer spatulas (13).

22. Domestic electrical appliance (1) according to claim 21 dependent on one of claims 15 to 20, **characterised in that** the housings (22) are produced in the seat element (17).

23. Domestic electrical appliance (1) according to claim 21 dependent on claim 13 or one of the claims dependent thereon, **characterised in that** the housings (22) are produced in the base (30).

24. Domestic electrical appliance (1) according to one of claims 1 to 23, **characterised in that** it comprises means for storing a cable (21) supplying the electric element.

25. Domestic electrical appliance (1) according to claim 24 dependent on claim 17 or one of the claims dependent thereon, **characterised in that**, when the seat element (17) and the heating assembly (2) are fixed to each other, the domestic electrical appliance (1) forms the frame of a reel used for winding the cable (21) thereon.

26. Domestic electrical appliance (1) according to claim 24 dependent on claim 13 or one of the claims dependent thereon, **characterised in that** the base (30) comprises an annular groove (37) for storing the cable (21).

## Patentansprüche

1. Elektro-Haushaltsgerät (1) mit einerseits einer Heizeinrichtung (2), die aufweist eine Kochplatte (4) mit einer Oberseite (6), die zur Aufnahme eines zu garenden Lebensmittels ausgebildet ist, und einen elektrischen Widerstand, der unter der Unterseite (7) der Kochplatte (4) angeordnet ist, und anderseits, Füßen (3), die mit der Heizeinrichtung (2) beweglich verbunden sind, zwischen einer Verstauposition und einer Benutzungsposition, in welcher diese so ausgebildet sind, dass diese die Heizeinrichtung (2) in einem ausreichenden Abstand zur Unterlage halten, auf welcher das Gerät (1) positioniert ist, um vorzugsweise während der Benutzung des Geräts (1) einen Teller unter die Heizeinrichtung (2) bringen zu können und das Lebensmittel von der Kochplatte (4) auf den Teller zu überführen, **dadurch gekennzeichnet, dass** die Heizeinrichtung (2) eine Platte aufweist, die einen Reflektor (11) bildet, der sich unter der Kochplatte (4) und den elektrischen Widerstand erstreckt, und dass in der Verstauposition die Füße (3) an und unter der Heizeinrichtung (2) entlang derselben angeordnet sind.

2. Elektro-Haushaltsgerät (1) nach Anspruch 1, **dadurch gekennzeichnet, dass** die Heizeinrichtung (2) eine Gelenkeinrichtung (31) umfasst, welche eine verschwenkbare Anlenkung der Füße (3) in Bezug zu der Heizeinrichtung (2) ermöglicht.

3. Elektro-Haushaltsgerät (1) nach Anspruch 2, **dadurch gekennzeichnet, dass** die Gelenkeinrichtung (31) derart ausgebildet ist, dass sie die Füße (3) in ihren Verstau- und Benutzungspositionen durch ein Vorbeibewegen an einer harten Stelle festlegen.

4. Elektro-Haushaltsgerät (1) nach Anspruch 3, **dadurch gekennzeichnet, dass** jeder Fuß (3) zwei Aushöhlungen (32) umfasst, die so ausgebildet sind, dass sie mit einer elastisch verformbaren Klammer (33) zusammenwirken, die mit der Heizeinrichtung (2) fest verbunden ist, um so die Festlegung des Fußes (3) in seiner entsprechenden Position zu ermöglichen.

5. Elektro-Haushaltsgerät (1) nach einem der Ansprüche 1 bis 4, **dadurch gekennzeichnet, dass** dieses vier Füße (3) bildet, die durch eine Stange gebildet sind, wobei die vier Füße (3) untereinander paarweise durch eine Verbindungsstange (15) verbunden sind, derart, dass die vier Füße (3) zwei Halteelemente (16) in U-Form bilden.

6. Elektro-Haushaltsgerät (1) nach Anspruch 5, **dadurch gekennzeichnet, dass** die zwei Halteelemente (16) senkrecht zueinander angeordnet sind, derart, dass, wenn sich die Füße (3) in ihrer Verstauposition befinden, sich die zwei Verbindungsstangen (15) kreuzen.

7. Elektro-Haushaltsgerät (1) nach einem der Ansprüche 1 bis 4, **dadurch gekennzeichnet, dass** dieses drei Füße (3) unabhängig voneinander aufweist.

8. Elektro-Haushaltsgerät (1) nach einem der Ansprüche 1 bis 7, **dadurch gekennzeichnet, dass** die Heizeinrichtung (2) Rillen (14) aufweist, die so ausgebildet sind, dass diese die Füße (3) in der Verstauposition aufnehmen können.

9. Elektro-Haushaltsgerät (1) nach einem der Ansprüche 1 bis 8, **dadurch gekennzeichnet, dass** die Oberseite (6) der Kochplatte (4) einen Umfangsrand (8) aufweist, der nach oben unter einem Winkel von etwa 30° zur Ebene der Kochplatte (4) vorsteht.

10. Elektro-Haushaltsgerät (1) nach einem der Ansprüche 1 bis 9, **dadurch gekennzeichnet, dass** die Oberseite (6) der Kochplatte (4) radiale Rippen (9) aufweist, die vertikal vorstehen und die Oberseite (6) in Kochbereiche (10) unterteilen.

11. Elektro-Haushaltsgerät (1) nach einem der Ansprüche 1 bis 10, **dadurch gekennzeichnet, dass** der Reflektor (11) Öffnungen (12) umfasst, die ein Übertragen der Wärmeenergie auf ein Behältnis zu übertragen, das warm zu haltende Lebensmittel enthält, und unter der Heizeinrichtung (2) zwischen den Füßen (3) angeordnet ist.

12. Elektro-Haushaltsgerät (1) nach einem der Ansprüche 1 bis 10, **dadurch gekennzeichnet, dass** die Heizeinrichtung (2) eine Basis (30) umfasst, die sich unter die Kochplatte (4) und den elektrischen Widerstand erstreckt.

13. Elektro-Haushaltsgerät nach Anspruch 12, **dadurch gekennzeichnet, dass** die Basis (30) sich unter dem Reflektor (11) erstreckt, der durch die Basis (30) und die Kochplatte (4) umschlossen ist.

14. Elektro-Haushaltsgerät nach einem der Ansprüche 1 bis 13, **dadurch gekennzeichnet, dass** die Kochplatte 4 in weitere Elemente (11, 30) separierbar ist, welche die Heizeinrichtung (2) bilden.

15. Elektro-Haushaltsgerät (1) nach einem der Ansprüche 1 bis 14, **dadurch gekennzeichnet, dass** dieses ein Auflageelement (17) umfasst, das abnehmbar ausgebildet ist, um als Träger zu dienen, auf welchem die Füße (3) gestellt sind, wenn sich diese in der Benutzungsposition befinden.

16. Elektro-Haushaltsgerät (1) nach Anspruch 15, **dadurch gekennzeichnet, dass** das Auflageelement (17) durch eine Platte (17) gebildet wird, die sich radial über die Heizeinrichtung (2) erstreckt, wenn sie als Träger dient, so dass sie die Lebensmittelstücke aufnehmen kann, die von der Heizeinrichtung (2) herunterfallen.

17. Elektro-Haushaltsgerät (1) nach Anspruch 15 oder 16, **dadurch gekennzeichnet, dass** das Auflageelement (17) so ausgebildet ist, dass dieses mit der Heizeinrichtung (2) unter diesem fest verbunden ist, wenn sich die Füße (2) in ihrer Verstauposition befinden, so dass jene in dieser Position gehalten werden.

18. Elektro-Haushaltsgerät (1) nach Anspruch 17, **dadurch gekennzeichnet, dass** das Auflageelement (17) Befestigungsmittel (19) umfasst, die so ausgebildet sind, dass diese mit komplementären Befestigungsmitteln (20) der Heizeinrichtung (2) zusammenwirken, derart, dass sie an dieser befestigt sind.

19. Elektro-Haushaltsgerät (1) nach Anspruch 18, **dadurch gekennzeichnet, dass** die komplementären Befestigungsmittel (20) durch eine Klammer (20) gebildet werden, die fest mit der Heizeinrichtung (2) verbunden ist, und so ausgebildet ist, dass diese einen Schlitz (19) durchquert, und nur dann ein Befestigungsmittel (19) bildet, wenn die Heizeinrichtung (2) und das Auflageelement (17) ordnungsgemäß zueinander ausgerichtet sind und die Befestigung dann herbeiführen, wenn diese nicht ordnungsgemäß ausgerichtet sind, wobei die Klammer (20) dann den Schlitz (19) durchquert.

20. Elektro-Haushaltsgerät (1) nach einem der Ansprüche 16 bis 19, abhängig vom Anspruch **dadurch gekennzeichnet, dass** das Auflageelement (17) eine Rille (18) in Form eines Kreuzes umfasst, die so ausgebildet ist, dass sie die Verbindungsstangen (15) aufnehmen kann, wenn sich die Füße (3) in der Benutzungsposition befinden.

21. Elektro-Haushaltsgerät (1) nach einem der Ansprüche 1 bis 20, **dadurch gekennzeichnet, dass** dieses Aufnahmen (22, 34) umfasst, die so ausgebildet sind, dass sie Übertragungsspatel (13) aufnehmen können.

22. Elektro-Haushaltsgerät (1) nach Anspruch 21, abhängig von einem der Ansprüche 15 bis 20, **dadurch gekennzeichnet, dass** die Aufnahmen (22) in dem Auflageelement (17) ausgebildet sind.

23. Elektro-Haushaltsgerät (1) nach Anspruch 21, abhängig von Anspruch 13 oder einem der Ansprüche, die davon abhängig sind, **dadurch gekennzeichnet, dass** die Aufnahmen (22) in der Basis (30) ausgebildet sind.

24. Elektro-Haushaltsgerät (1) nach einem der Ansprüche 1 bis 23, **dadurch gekennzeichnet, dass** dieses Mittel umfasst, die das Verstauen eines Versorgungskabels (21) des elektrischen Widerstands ermöglichen.

25. Elektro-Haushaltsgerät (1) nach Anspruch 24, abhängig von Anspruch 17 oder einem der Ansprüche, die davon abhängig sind, **dadurch gekennzeichnet, dass**, wenn das Auflageelement (17) und die Heizeinrichtung (2) aneinander festgelegt sind, das Elektro-Haushaltsgerät (1), das einen Spulenkörper bildet, der dazu verwendet wird, das Kabel (21) daran aufzurollen.

26. Elektro-Haushaltsgerät (1) nach Anspruch 24, abhängig von Anspruch 13 oder einem der Ansprüche, die davon abhängig sind, **dadurch gekennzeichnet, dass** die Basis (30) eine Ringnut (37) zur Aufnahme des Kabels (21) umfasst.
